# EUROPÄISCHE PATENTANMELDUNG

(11) **EP 0 740 978 A1**
(43) Veröffentlichungstag der Anmeldung: **06.11.1996**
(21) Anmeldenummer: 96106976.2
(22) Anmeldetag: 03.05.1996
(51) Int. Cl.: B23Q 39/02, B23Q 5/04, B23Q 11/08, B23Q 11/10

(54) **Bearbeitungsmaschine für stabförmige Werkstücke, insbesondere Hohlprofile**

(30) Priorität: 03.05.1995 DE 19515716
(71) Anmelder: Eisenbach, Bernhard, D-65611 Brechen (DE)
(72) Erfinder: Eisenbach, Bernhard, D-65611 Brechen (DE)
(74) Vertreter: Müller, Eckhard, Dr.

(57) **Zusammenfassung**

Es handelt sich um eine Bearbeitungsmaschine für stabförmige Werkstücke (3), insbesondere Hohlprofile, zum Herstellen von Ausnehmungen, Durchbrüchen o. dgl. in den Werkstückwänden mit einem Bearbeitungssupport (4, 5, 6), welcher in drei senkrecht aufeinanderstehenden Achsen verfahrbar und an welchem ein drehbarer Bearbeitungskopf (7) mit mehreren auf einem Kreisumfang verteilt angeordneten Bearbeitungswerkzeugen (8) angeordnet ist. Die Bearbeitungsmaschine zeichnet sich dadurch aus, daß die Drehachse (37) des Bearbeitungskopfes (7) parallel zur Längsrichtung des zu bearbeitenden Werkstückes (3) ausgerichtet ist und daß auf wenigstens einer Längsseite des Werkstückes (3) ein Freiraum für die Bewegung des Bearbeitungskopfes (7) vorgesehen ist.

## Beschreibung

Die Erfindung bezieht sich auf eine Bearbeitungsmaschine für stabförmige Werkstücke, insbesondere Hohlprofile, zum Herstellen von Ausnehmungen, Durchbrüchen o. dgl. in den Werkstückwänden mit einem Bearbeitungssupport, welcher in drei senkrecht aufeinanderstehenden Achsen verfahrbar und an welchem ein drehbarer Bearbeitungskopf mit mehreren auf einem Kreisumfang verteilt angeordneten Bearbeitungswerkzeugen angeordnet ist.

Derartige Bearbeitungsmaschinen dienen überwiegend zur Bearbeitung von Fenster- und Türrahmen aus Metall- oder Kunststoffprofilen. Durchbrüche müssen vor allem im Bereich des einzusetzenden Schlosses hergestellt werden, wie bspw. eine Schloßkastenausnehmung in einer Profilwand, Drückerbohrungen oder Profilzylinderausnehmungen in den beiden benachbarten Profilwänden bei Türrahmen.

Hierzu weisen bekannte Bearbeitungsmaschinen ein Maschinengestell auf, an dem eine Werkstückaufnahme angeordnet ist. Ein an dem Maschinengestell gelagerter Bearbeitungssupport ist in drei Achsen verfahrbar. Der Bearbeitungssupport trägt einen Bearbeitungskopf mit mehreren auf einem Kreisumfang angeordneten Bohr-Fräs-Spindeln, welche nacheinander mit dem in der Werkstückaufnahme eingespannten Hohlprofil in Eingriff gebracht werden und die Durchbrüche herstellen. Um eine Bearbeitung nicht nur der Oberseite des eingespannten Werkstückes zu ermöglichen, sind insgesamt mehrere Positionen am Werkzeugkopf mit Bearbeitungswerkzeugen bestückt, deren Werkzeugachse quer zur Längserstreckung des zu bearbeitenden Werkstückes ausgerichtet sind. Nachteilig hierbei ist, daß es für jede zu bearbeitende Seitenwandung eines gesonderten Satzes an Bearbeitungswerkzeugen bedarf, was einen erheblichen Aufwand darstellt.

Davon ausgehend liegt der Erfindung die Aufgabe zugrunde, eine Bearbeitungsmaschine der eingangs genannten Art anzugeben, welche bei konstruktiv einfachem Aufbau einen flexibleren Einsatz der jeweiligen Bearbeitungswerkzeuge erlaubt.

Zur Lösung der Aufgabe ist es nach der Erfindung vorgesehen, daß die Drehachse des Bearbeitungskopfes parallel zur Längsrichtung des zu bearbeitenden Werkstückes ausgerichtet ist und daß auf wenigstens einer Längsseite des Werkstückes ein Freiraum für die Bewegung des Bearbeitungskopfes vorgesehen ist. Durch Verfahren und Drehen des Bearbeitungskopfes können die am Bearbeitungskopf angeordneten unterschiedlichen Bearbeitungswerkzeuge sowohl für die Bearbeitung der Oberseite als auch der beiden Seitenwände des jeweiligen Werkstückes eingesetzt werden. Für eine 3-Seitenbearbeitung bedarf es nur noch eines Werkzeugsatzes. Demgegenüber müssen bei den bekannten Bearbeitungsmaschinen die Bearbeitungswerkzeuge dreifach vorgesehen werden, was einen erheblichen konstruktiven Aufwand darstellt und wegen des erforderlichen Platzbedarfes für die einzelnen Bearbeitungswerkzeuge bzw. deren getriebemäßige Anbindung am Bearbeitungskopf häufig gar nicht möglich ist. Selbstverständlich können die Bearbeitungswerkzeuge der erfindungsgemäßen Maschine auch zur Bearbeitung der Stirnseite der Werkstücke eingesetzt werden.

Nach einer ersten besonderen Ausführungsform der Erfindung ist es vorgesehen, daß der Bearbeitungskopf einen zentralen Antrieb für die Bearbeitungswerkzeuge aufweist und zwischen Antrieb und Bearbeitungswerkzeugen jeweils ein Über- oder Untersetzungsgetriebe zwischengeschaltet ist. Hierdurch ist erreicht, daß entsprechend den unterschiedlichen Anforderungen des jeweiligen Bearbeitungswerkzeuges unterschiedliche Drehzahlen mit nur einer Antriebseinheit gefahren werden können. Bspw. erfordert ein Fräswerkzeug oder ein Sägewerkzeug eine höhere Drehzahl als ein Bohrwerkzeug oder ein Werkzeug zum Gewindeschneiden. Durch dies Zwischenschaltung eines Getriebes ist es auch möglich, niedertourige Antriebsmotore einzusetzen, wodurch der Lärmpegel der Bearbeitungsmaschine reduziert ist.

In konstruktiv besonders einfacher Weise sind dabei die antriebsseitigen Elementenpaare der Getriebe als Kegelräder ausgebildet. Diese Winkelgetriebe ermöglichen eine einfache Umlenkung der Rotationsbewegung des mit seiner Antriebswelle parallel und ggf. koaxial zur Drehachse des Bearbeitungskopfes ausgerichteten Antriebswelle des Motors auf die radial angeordneten Werkzeugspindeln.

Die jeweils zwischen Antrieb- und Bearbeitungswerkzeug zwischengeschalteten Getriebe können nach der Erfindung auch als Getriebekette ausgebildet sein, wobei den antriebsseitigen Elementenpaaren Räder- oder Zugmittelgetriebe nachgeschaltet sind, um eine weitere Unter- bzw. Übersetzung der Drehzahlen zwischen Antrieb und Bearbeitungswerkzeug zu erhalten.

Dabei können die Elementenpaare des Räder- bzw. Zugmittelgetriebes in konstruktiv einfacher Weise auf den Wellen der den jeweiligen Bearbeitungswerkzeugen zugeordneten Kegelräder und auf den die Aufnahme für die Bearbeitungswerkzeuge, bspw. ein Bohrfutter tragenden Werkzeugspindeln angeordnet sein.

Im einfachsten Fall werden alle Bearbeitungswerkzeuge zugleich von der Antriebseinheit angetrieben. Nach der Erfindung ist es aber auch möglich, daß nur das jeweils zum Einsatz kommende Bearbeitungswerkzeug angetrieben wird, indem die antriebsseitigen Elementenpaare der Getriebe exzentrisch zueinander gelagert sind und für exzentrische die Verstellung von Antrieb gegenüber Bearbeitungskopf sowie die Verstellung des Bearbeitungskopfes selbst, vorzugsweise separate Verstellantriebe vorgesehen sind. Hierdurch ist der Geräuschpegel der erfindungsgemäßen Bearbeitungsmaschine und ebenso die Gefahr, daß sich das Bedienerpersonal an den radial nach außen stehenden Bearbeitungswerkzeugen verletzt, wesentlich reduziert.

Die Festlegung des verdrehbaren Bearbeitungskopfes in der jeweiligen Bearbeitungsstellung des gewünschten Bearbeitungswerkzeuges kann nach der Erfindung mittels Rast- und Gegenrastmitteln an Werkzeugkopf und Bearbeitungssupport erfolgen, bspw. dadurch, daß wenigstens ein am Bearbeitungssupport angeordneter und ggf. pneumatisch betätigbarer Rastbolzen in entsprechende Bohrungen am Bearbeitungskopf eingreift.

Alternativ oder zusätzlich ist es nach der Erfindung auch möglich, daß der Bearbeitungskopf einen konzentrisch zur Drehachse angeordneten Zahnkranz aufweist, mit welchem ein Ritzel des Drehantriebes für den Bearbeitungskopf kämmt. Die Zahnteilung des Zahnkranzes kann bspw. so gewählt sein, daß der Bearbeitungskopf in Schritten von 5° gedreht werden kann, um die exakte Position der auf dem Kreisumfang des Bearbeitungskopfes angeordneten Bearbeitungswerkzeuge anzufahren. Die Fixierung des Bearbeitungskopfes in der Arbeitsstellung des jeweiligen Bearbeitungswerkzeuges kann dabei mittels eines am Bearbeitungssupport angeordneten und in die Zahnung des Zahnkranzes eingreifenden Rastbolzens, welcher ggf. pneumatisch betätigbar ist, erfolgen.

Nach einer besonderen Ausführungsform der Erfindung ist es auch vorgesehen, daß an der Stirnseite des Bearbeitungskopfes eine sich zu den radial nach innen weisenden Enden der Werkzeugspindeln erstreckende Ausnehmung gebildet ist und die Spindelendbereiche zum Zusammenwirken mit einem Werkzeug ausgebildet sind. Durch die erfindungsgemäße Zugänglichkeit der Spindelendbereiche ist ein Wechsel der Bearbeitungswerkzeuge wesentlich vereinfacht. Hierzu wird ein Werkzeug in die Ausnehmung hineingeführt und bspw. zum Gegenhalten der Werkzeugspindeln an dem jeweiligen Spindelendbereich bzw. an dort vorgesehenen Schlüsselflächen angesetzt.

Nach der Erfindung ist es weiterhin vorgesehen, daß ein den Werkzeugkopf umgebende, für die seitliche Bearbeitung des Hohlprofils verschwenkbare Schutzhaube vorgesehen ist, welche das jeweils zum Einsatz kommende Bearbeitungswerkzeug freigibt. Bei einer Bearbeitung der Seitenwandungen des jeweiligen Hohlprofils wird die Schutzhaube jeweils um 90° gedreht, um das entsprechende Bearbeitungswerkzeug freizugeben. Das Verschwenken der Schutzhaube kann bspw. mittels druckmittelbeaufschlagten Kolben-Zylinder-Anordnungen erfolgen oder auch dadurch, daß die Schutzhaube beim Absenken des Bearbeitungskopfes für die Bearbeitung einer Seitenwandung auf einen ortsfest am Bearbeitungssupport angeordneten Anschlag läuft, welcher eine Verdrehung der Schutzhaube bewirkt. Wenn dann der Bearbeitungskopf wieder in eine Stellung zur Bearbeitung der Oberseite des Hohlprofiles gefahren wird, bewirken Federelemente eine Rückschwenkung der Schutzhaube.

Nach einem Vorschlag der Erfindung ist an der Schutzhaube, in dem das jeweilige Bearbeitungswerkzeug freigebenden offenen Bereich eine Düse für die Zuführung von Schneidöl o. dgl. Flüssigkeit vorgesehen. Hierdurch bedarf es in konstruktiv vorteilhafter Weise nur einer einzähligen Zuführeinrichtung für das Schneidöl, auch unabhängig davon, welche Seite des Werkstückes bearbeitet werden soll.

Schließlich ist es nach der Erfindung auch vorgesehen, daß der Bearbeitungskopf mit Antrieb an einer das zu bearbeitende Hohlprofil übergreifenden, in Längsrichtung des Hohlprofils verfahrbaren portalähnlichen Brücke gelagert ist. Hierdurch kann der Bearbeitungskopf auf einer U-förmigen Bewegungsbahn um das zu bearbeitende Werkstück herumgefahren werden.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: eine mögliche Ausführungsform einer erfindungsgemäßen Bearbeitungsmaschine in einer Vorderansicht,
- Figur 2: die Bearbeitungsmaschine gemäß Figur 1 in einer Seitenansicht in Bearbeitungsstellung zur Bearbeitung der Oberseite eines stabförmigen Profilstückes,
- Figur 2a: eine Teildarstellung der Bearbeitungsmaschine gemäß Figur 1 in einer Stellung zur Bearbeitung der einen Seitenwand des Profilstückes,
- Figur 2b: eine Teildarstellung der Bearbeitungsmaschine gemäß Figur 1 in einer Bearbeitungsstellung zur Bearbeitung der anderen Seitenwand des Profilstückes,
- Figur 2c: eine Teildarstellung der Bearbeitungsmaschine gemäß Figur 1 in einer Bearbeitungsstellung zur Einbringung eines Wasserschlitzes im Bereich der Oberseite des Profilstückes,
- Figur 2d: die Bearbeitungsmaschine gemäß Figur 1 in einer Stellung zur Einarbeitung eines Wasserschlitzes in eine Seitenwandung,
- Figur 3: eine Draufsicht auf die Bearbeitungsmaschine gemäß Figur 1,
- Figur 3a: die Bearbeitungsmaschine gemäß Figur 1 in Bearbeitungsstellung an der Stirnseite eines Profilstückes mit einem kreissägeähnlichen Bearbeitungswerkzeug,
- Figur 4: eine mögliche Ausführungsform eines Bearbeitungskopfes für eine Bearbeitungsmaschine gemäß Figur 1 in einem Teilschnitt,
- Figur 5: den Bearbeitungskopf gemäß Figur 4 längs der Schnittlinie V-V,
- Figur 6: eine Seitenansicht des Bearbeitungskopfes gemäß Figur 4,
- Figur 7: eine weitere Ausführungsform eines Bearbeitungskopfes mit wahlweisem Antrieb des jeweiligen Bearbeitungswerkzeuges,
- Figur 8: einen Teilschnitt des Bearbeitungskopfes gemäß Figur 7 längs der Linie VIII-VIII,
- Figur 9: eine weitere Ausführungsform einer erfindungsgemäßen Bearbeitungsmaschine mit einer an einer Brücke verschiebbar angeordneten Bearbeitungseinheit und
- Figur 10: eine Seitenansicht der Bearbeitungsmaschine gemäß Figur 9.

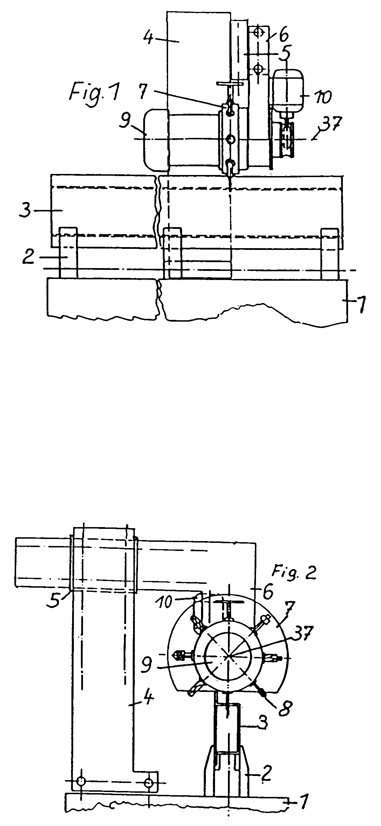

Die Vorrichtung gemäß Figuren 1 bis 3 weist eine auf einem Maschinenbett 1 angeordnete Aufnahme 2 für ein zu bearbeitendes Werkstück, insbesondere ein Hohlprofil 3 für einen Fenster- oder Türrahmen auf. Das Hohlprofil 3 ist mittels Spannelementen, welche ebenfalls mit 2 bezeichnet sind, festlegbar. An dem Maschinenbett 1 ist ein Schlitten 4 in Längsrichtung verfahrbar. An dem Schlitten 4 ist ein Kreuzschlitten 5 gelagert, an welchem seinerseits ein Querschlitten 6 verschiebbar geführt ist. Der so gebildete Werkzeugsupport trägt einen um eine Drehachse 37 verdrehbaren Bearbeitungskopf 7 mit mehreren auf einem Kreisumfang angeordneten Bearbeitungswerkzeugen 8. Mittels des Werkzeugsupports ist der Bearbeitungskopf 7 in Längsrichtung, in Querrichtung und in senkrechter Richtung verfahrbar.

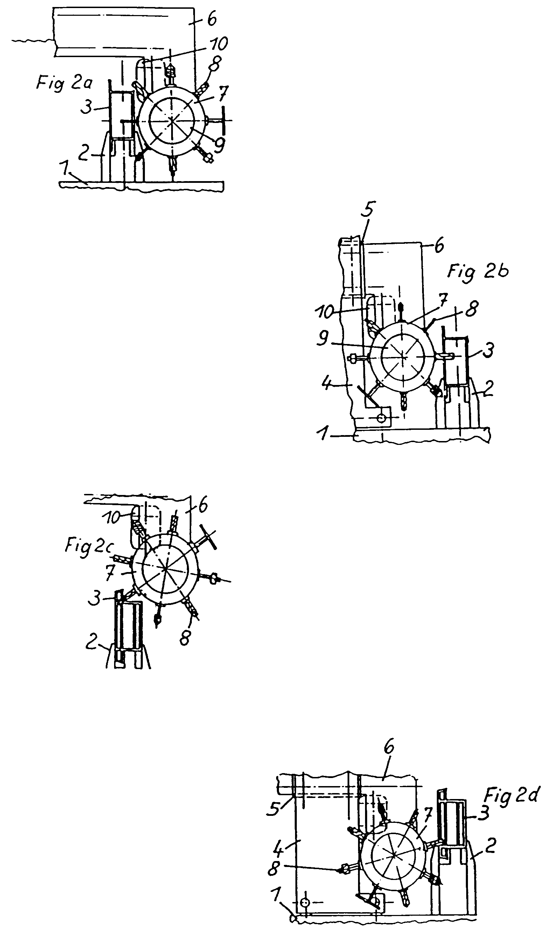

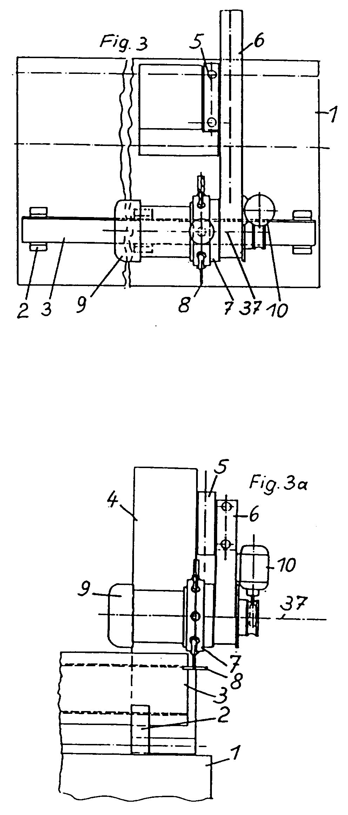

Die Drehachse 37 des Bearbeitungskopfes 7 ist quer zur Längserstreckung des Hohlprofiles 3 ausgerichtet. Durch Verfahren und Drehen des Bearbeitungskopfes 7 können mit ein und denselben Bearbeitungswerkzeugen 8 sowohl die Oberseite als auch die Seitenteile und ebenso die Stirnseiten des stabförmigen Werkstückes 3 bearbeitet werden. Dies ist beispielhaft in den Figuren 2 bis 2d dargestellt, so in Figur 2 die Bearbeitung der Oberseite des Werkstückes 3, in Figur 2a die Bearbeitung der rechten Seitenwandung des Werkstückes 3, in Figur 2b die Bearbeitung der linken Seitenwandung des Werkstückes 3, in Figur 2c die Stellung des Bearbeitungskopfes 7 zur Einbringung eines Wasserschlitzes im Bereich der Oberseite des eingespannten Hohlprofiles 3 und in Figur 2d die Einarbeitung eines Wasserschlitzes auf der einen Profilseite, ebenfalls mit einer Schrägstellung des Bearbeitungswerkzeuges 8 bzgl. einer Horizontalen. Die stirnseitige Bearbeitung des Werkstückes 3, bspw. mit einem kreissägeartigen Werkzeug 14 ist in Figur 3a dargestellt.

Der Motor für den Antrieb der Bearbeitungswerkzeuge 8 ist mit Bezugszeichen 9 bezeichnet, der Verstellmotor für den Bearbeitungskopf 7 mit Bezugszeichen 10; bei dem hier gewählten Ausführungsbeispiel wirkt der Verstellmotor 10 auf ein Schneckengetriebe.

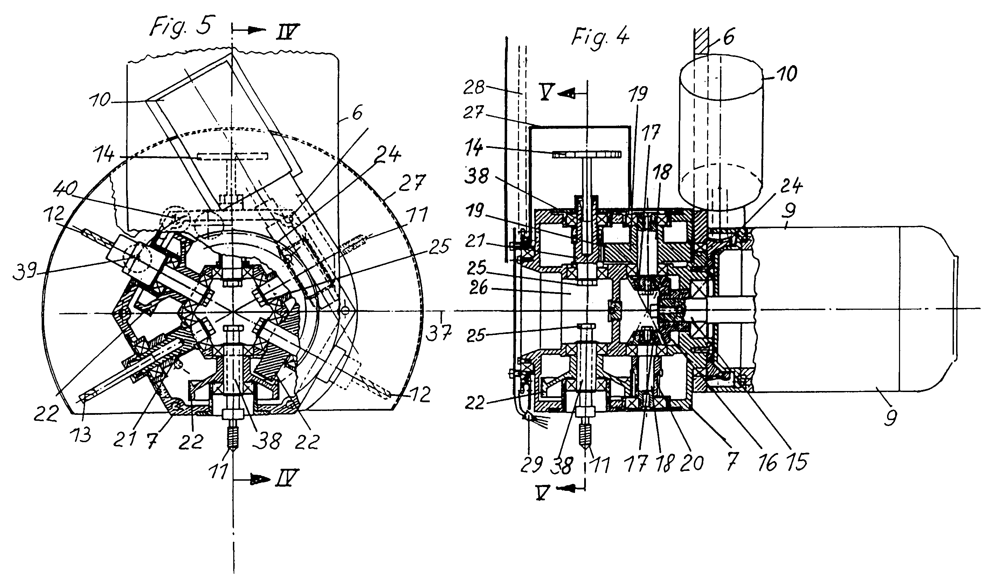

Bei der Ausführungsform des Bearbeitungskopfes 7 gemäß Figuren 4 bis 6 werden alle Bearbeitungswerkzeuge 8 gleichzeitig angetrieben. Der Antriebsmotor 9 weist eine Antriebswelle 15 auf mit an ihrem freien Ende angeordneten großen Kegelrad 16, das mit kleineren Kegelrädern 17, die dem jeweiligen Bearbeitungswerkzeug 8 zugeordnet sind, in Eingriff steht.

Auf den Wellen 18 der Kegelräder 17 sind wahlweise kleine oder größere Zahnriemenscheiben 19, 20 angeordnet, welche über einen (nicht besonders dargestellten) Zahnriemen im Eingriff mit zugeordneten auf den Werkzeugspindeln 38 angeordneten Zahnriemenscheiben 21, 22 stehen. Durch die unterschiedlichen Übersetzungsverhältnisse können entsprechend den Anforderungen des jeweiligen Bearbeitungswerkzeuges 8 unterschiedliche Drehzahlen unter Einsatz von nur einem Antriebsmotor 9 gefahren werden. Bspw. ist für den Fräser 13 eine hohe Drehzahl erforderlich, was dadurch erreicht wird, daß die Rotationsbewegung von einer im Umfang größeren Scheibe 19 auf eine kleinere Scheibe 21 übertragen wird, während kleinere Drehzahlen durch die Übersetzung von im Durchmesser kleineren Scheiben 20 auf größere Scheiben 22 erfolgt.

Wie insbesondere aus Figur 4 zu ersehen, sind an dem Bearbeitungskopf 7 unterschiedliche Werkzeuge gelagert, nämlich unter anderem ein Gewindebohrer 11, ein Bohrer 12, ein Nutenfräser 13 und ein kreissägeähnliches Werkzeug 14. Selbstverständlich können auch mehr als die in Figur 4 dargestellten sechs Bearbeitungswerkzeuge an dem Bearbeitungskopf 7 angeordnet werden.

Zum Verstellen bzw. Drehen des Bearbeitungskopfes 7 ist ein Stellmotor 10 vorgesehen, der bspw. über Schneckenradgetriebe 24 die Drehbewegung des Bearbeitungskopfes 7 bewirkt. Anstelle von Schneckenrädern ist es selbstverständlich auch möglich, Kettenräder, Stirnräder o. dgl. Übertragungsmittel einzusetzen.

Um den Bearbeitungskopf 7 in seinen Außenabmessungen klein zu halten und trotzdem einen einfachen Wechsel der Bearbeitungswerkzeuge 8 zu ermöglichen, sind die Werkzeugspindeln 38 an ihren radial nach innen weisenden Enden mit einer Schlüsselfläche 25 zum Ansetzen eines Werkzeuges versehen, wobei diese Schlüsselflächen 25 von der Stirnseite des Bearbeitungskopfes 7 her durch eine Aussparung 26 an dem Getriebeteil leicht zugänglich sind.

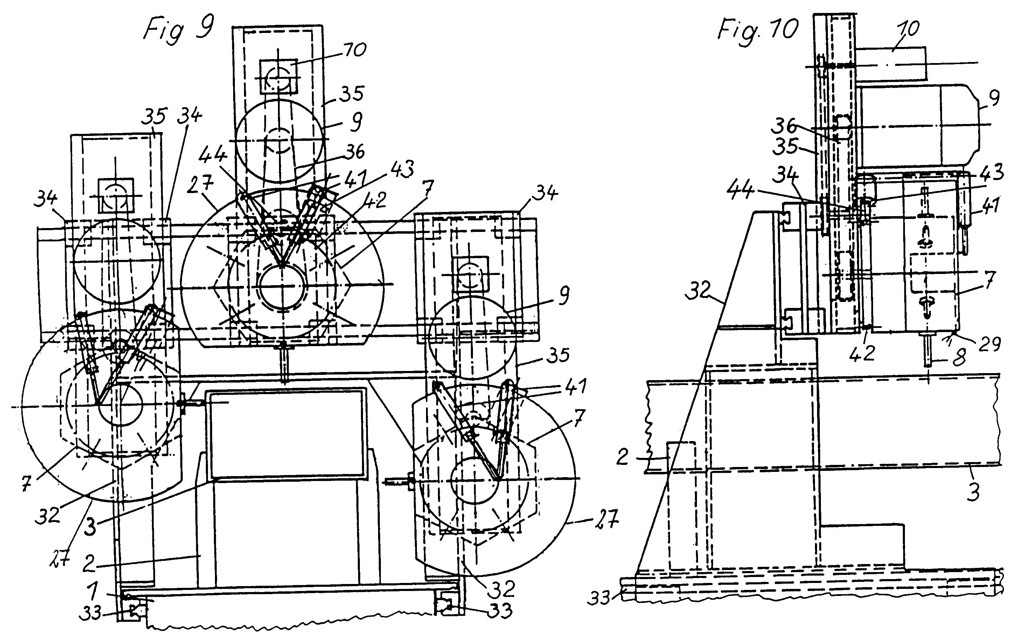

Da bei diesem Ausführungsbeispiel alle Bearbeitungswerkzeuge 8 mitlaufen, ist dafür zu sorgen, daß die sich nicht in Bearbeitungsstellung befindlichen Werkzeuge 8 keine Unfallgefahr für den Bediener darstellen. Für diesen Zweck ist eine Schutzhaube 27 vorgesehen, welche z. B. durch einen Kettentrieb 28 entsprechend der jeweiligen Bearbeitungsposition an einer der Seitenwandungen oder auf der Oberseite des Hohlprofiles 3 verdreht werden kann; die einzelnen Stellungen der Schutzhaube 27 sind beispielhaft aus Figur 9 zu ersehen. Der Antrieb für den Kettentrieb 28 ist bei dem hier gewählten Ausführungsbeispiel nicht näher dargestellt.

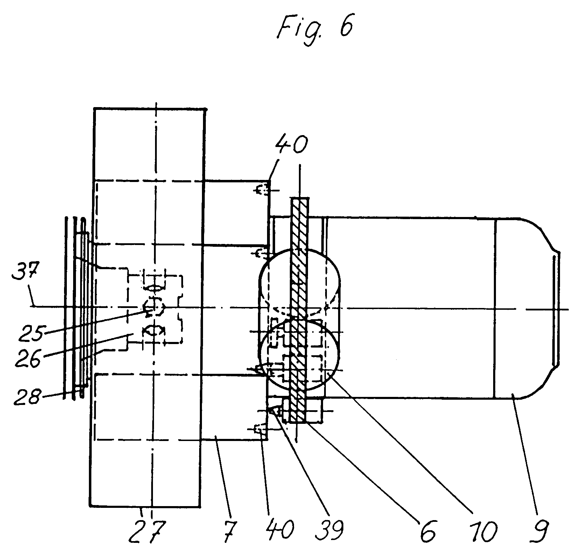

Wie insbesondere Figuren 5 und 6 zu entnehmen, sind für die Fixierung des Bearbeitungskopfes 7 in der jeweiligen Bearbeitungsstellung des gewünschten Bearbeitungswerkzeuges 8 Rast- und Gegenrastmittel 39 bzw. 40 an dem Werkzeugkopf 7 bzw. dem Bearbeitungssupport vorgesehen. Bei dem hier gewählten Ausführungsbeispiel ist das Rastmittel 39 als pneumatisch betätigbare Rastbolzen ausgebildet, welcher in umfangsseitig des Bearbeitungskopfes 7 angeordnete Bohrungen 40 eingreift.

Gemäß Figur 4 ist an der Schutzhaube 27, in dem das jeweilige Bearbeitungswerkzeug 8 freigebenden Bereich eine Düse 29 für die Zuführung von Schneidöl o. dgl. Flüssigkeit vorgesehen. Hierdurch bedarf es in konstruktiv vorteilhafter Weise nur einer einzähligen Zuführeinrichtung für das Schneidöl, unabhängig davon, ob die beiden Seitenwandungen oder die Oberseite des Werkstückes 3 bearbeitet werden sollen.

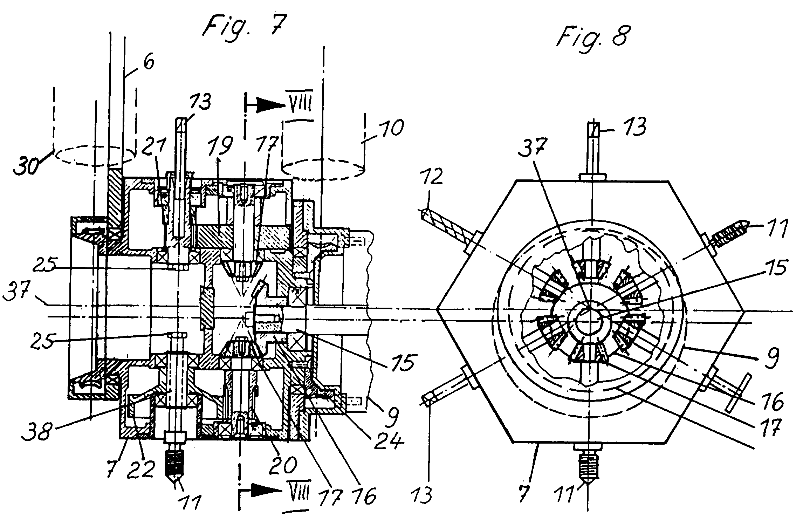

Figur 7 und 8 zeigen eine Ausführungsform einer Antriebseinheit, bei welcher jeweils nur das in Bearbeitungsstellung sich befindende Bearbeitungswerkzeug 8 angetrieben wird. Hierfür ist eine exzentrische Lagerung des Antriebsmotors mit Antriebswelle 15 bzgl. des Bearbeitungskopfes 7 vorgesehen. Der Verstellmotor 30 dient zur exzentrischen Verstellung des Bearbeitungskopfes 7, um das Antriebskegelrad 16 mit dem dem jeweiligen Bearbeitungswerkzeug 8 zugeordneten Kegelritzel 17 in Eingriff zu bringen. Der Verstellmotor 10 dient wiederum zum Verdrehen des Bearbeitungskopfes 7 selbst.

In Figuren 9 und 10 ist eine weitere Ausführungsform einer Bearbeitungsmaschine gezeigt, wobei der Bearbeitungskopf 7 an einer portalähnlichen Brücke 32 gehalten ist. Die Brücke 32 ist an Schienen 33 senkrecht zur Zeichenebene von Figur 9 verfahrbar. An dem Portal 32 ist ein Kreuzschlitten 34 und an diesem wiederum ein vertikaler Schlitten 35 gelagert, wodurch der Bearbeitungskopf 7 längs des zu bearbeitenden Werkstückes 3 und mit einer U-förmigen Bewegung um das Werkstück 3 herum gefahren werden kann. Der Antriebsmotor 9 ist oberhalb des Bearbeitungskopfes 7 angeordnet und treibt über einen Riemen 36 die Bearbeitungswerkzeuge 8 an.

An dem Bearbeitungskopf 7 befindet sich konzentrisch zu seiner Drehachse ein Zahnkranz 42, welcher mit einem Ritzel 44 kämmt, das ebenfalls über einen Riemen von dem Antriebsmotor 10 angetrieben wird und für die Verdrehung des Bearbeitungskopfes 7 sorgt. Für die Fixierung des Bearbeitungskopfes 7 in der Bearbeitungsstellung des gewünschten Bearbeitungswerkzeuges 8 ist wenigstens ein am Bearbeitungssupport angeordneter, ggf. pneumatisch betätigbarer Rastbolzen 42 vorgesehen, welcher in die Zahnung des Zahnkranzes 42 eingreift.

Bei dem Ausführungsbeispiel gemäß Figuren 9 und 10 erfolgt die Verdrehung der Schutzhaube 27 mittels Pneumatikzylindern 41, welche an dem Bearbeitungssupport gelagert sind und für die Verschwenkung der Schutzhaube 27 entsprechend der Bearbeitungsposition an der jeweiligen Seite sorgen.

Anstelle von einem Bearbeitungskopf 7 können selbstverständlich auch drei, ggf. gleichzeitig arbeitende Bearbeitungsköpfe angeordnet werden.

### Bezugszeichenliste

- 1: - Maschinenbett
- 2: - Aufnahme, Spannelement
- 3: - Werkstück, Hohlprofil
- 4: - Schlitten
- 5: - Kreuzschlitten
- 6: - Querschlitten
- 7: - Bearbeitungskopf
- 8: - Bearbeitungswerkzeug
- 9: - Antrieb
- 10: - Verstellmotor
- 11: - Gewindebohrer
- 12: - Bohrer
- 13: - Nutenfräser
- 14: - kreissägeähnliches Werkzeug
- 15: - Antriebswelle
- 16: - Kegelrad
- 17: - Kegelrad
- 18: - Welle
- 19: - Zahnriemenscheibe
- 20: - Zahnriemenscheibe
- 21: - Zahnriemenscheibe
- 22: - Zahnriemenscheibe
- 24: - Schneckenradgetriebe
- 25: - Werkzeugfläche
- 26: - Ausnehmung
- 27: - Schutzhaube
- 28: - Kettentrieb
- 29: - Düse
- 30: - Verstellmotor
- 32: - Brücke
- 34: - Kreuzschlitten
- 35: - Schlitten
- 36: - Riemen
- 37: - Drehachse
- 38: - Werkzeugspindel
- 39: - Rastmittel, Rastbolzen
- 40: - Gegenrastmittel, Bohrung
- 41: - Pneumatikzylinder
- 42: - Zahnkranz
- 43: - Rastelement
- 44: - Ritzel

## Patentansprüche

1. Bearbeitungsmaschine für stabförmige Werkstücke (3), insbesondere Hohlprofile, zum Herstellen von Ausnehmungen, Durchbrüchen o. dgl. in den Werkstückwänden mit einem Bearbeitungssupport (4, 5, 6; 32, 34, 35), welcher in drei senkrecht aufeinanderstehenden Achsen verfahrbar und an welchem ein drehbarer Bearbeitungskopf (7) mit mehreren auf einem Kreisumfang verteilt angeordneten Bearbeitungswerkzeugen (8) angeordnet ist, dadurch gekennzeichnet, daß die Drehachse (37) des Bearbeitungskopfes (7) parallel zur Längsrichtung des zu bearbeitenden Werkstückes (3) ausgerichtet ist und daß auf wenigstens einer Längsseite des Werkstückes (3) ein Freiraum für die Bewegung des Bearbeitungskopfes (7) vorgesehen ist.

2. Bearbeitungsmaschine nach Anspruch 1, dadurch gekennzeichnet, daß der Bearbeitungskopf (7) einen zentralen Antrieb (9) für die Bearbeitungswerkzeuge (8) aufweist und zwischen Antrieb (9) und Bearbeitungswerkzeugen (8) jeweils ein Über- oder Untersetzungsgetriebe zwischengeschaltet ist.

3. Bearbeitungsmaschine nach Anspruch 1 oder 2, dadurch gekennzeichnet, daß die antriebsseitigen Elementenpaare der Getriebe als Kegelräder (16, 17) ausgebildet sind.

4. Bearbeitungsmaschine nach einem der vorhergehenden Ansprüche, dadurch gekennzeichnet, daß den antriebsseitigen Elementenpaaren Räder- oder Zugmittelgetriebe nachgeschaltet sind.

5. Bearbeitungsmaschine nach Anspruch 4, dadurch gekennzeichnet, daß die Elementenpaare (19, 21; 20, 22) des Räder- bzw. Zugmittelgetriebes auf den Wellen (18) der den jeweiligen Bearbeitungswerkzeugen (8) zugeordneten Kegelrädern (17) und auf den Werkzeugspindeln (38) angeordnet sind.

6. Bearbeitungsmaschine nach einem der vorhergehenden Ansprüche, dadurch gekennzeichnet, daß die antriebsseitigen Elementenpaare (16, 17) exzentrisch zueinander gelagert sind und für die exzentrische Verstellung von Antrieb (9) zu Bearbeitungskopf(7) sowie für die Verdrehung des Bearbeitungskopfes (7) selbst, vorzugsweise separate Verstellantriebe (30, 10) vorgesehen sind.

7. Bearbeitungsmaschine nach einem der vorhergehenden Ansprüche, dadurch gekennzeichnet daß die Fixierung des verdrehbaren Bearbeitungskopfes (7) in der jeweiligen Bearbeitungsstellung des gewünschten Bearbeitungswerkzeuges (8) mittels Rast- und Gegenrastmitteln (39, 40) an dem Werkzeugkopf (7) und Bearbeitungssupport (4, 5, 6; 32, 34, 35) erfolgt.

8. Bearbeitungsmaschine nach einem der vorhergehenden Ansprüche, dadurch gekennzeichnet daß der Bearbeitungskopf (7) einen konzentrisch zur Drehachse (37) angeordneten Zahnkranz (42) aufweist, mit welchem ein Ritzel (44) des Drehantriebes (10) für den Bearbeitungskopf (7) kämmt, wobei die Fixierung des Bearbeitungskopfes (7) in der jeweiligen Bearbeitungsposition mittels einem in die Zahnung des Zahnkranzes (42) eingreifenden Rastelementes (43) erfolgt.

9. Bearbeitungsmaschine nach einem der vorhergehenden Ansprüche, dadurch gekennzeichnet, daß an der Stirnseite des Bearbeitungskopfes (7) eine sich zu den radial nach innen weisenden Enden der Werkzeugspindeln (38) erstreckende Ausnehmung (26) gebildet ist und die Spindelendbereiche (25) zum Zusammenwirken mit einem Werkzeug ausgebildet sind.

10. Bearbeitungsmaschine nach einem der vorhergehenden Ansprüche, dadurch gekennzeichnet, daß ein den Werkzeugkopf (7) umgebende, für die seitliche Bearbeitung des Hohlprofiles (3) verschwenkbare Schutzhaube (27) vorgesehen ist, welche das jeweils zum Einsatz kommende Bearbeitungswerkzeug (8) freigibt.

11. Bearbeitungsmaschine nach Anspruch 10, dadurch gekennzeichnet, daß die Schutzhaube (27) an ihrem das jeweilige Bearbeitungswerkzeug freigebenden offenen Bereich eine Düse (29) für die Zuführung von Schneidöl o. dgl. Flüssigkeit zu dem jeweiligen Bearbeitungswerkzeug (8) aufweist.

12. Bearbeitungsmaschine nach einem der vorhergehenden Ansprüche, dadurch gekennzeichnet, daß der Bearbeitungskopf (7) mit Antrieb (9) an einer das zu bearbeitende Hohlprofil (3) übergreifenden, in Längsrichtung des Hohlprofils (3) verfahrbaren portalähnlichen Brücke (32) gelagert ist.
